# DEMANDE DE BREVET EUROPEEN

(11) **EP 4 372 340 A1**
(43) Date de publication de la demande: **22.05.2024**
(21) Numéro de dépôt: 23208702.3
(22) Date de dépôt: 09.11.2023
(51) Int. Cl.: G01K 1/08, G01K 1/14

(54) **CAPTEUR DE TEMPÉRATURE À PIQUER À THERMOCOUPLE POUR PNEUMATIQUES**

(30) Priorité: 15.11.2022 FR 2211850
(71) Demandeur: Pyrocontrole, 69330 Meyzieu (FR)
(72) Inventeur: NICOLAS, Patrice, 69680 CHASSIEU (FR)
(74) Mandataire: Cabinet Beau de Loménie

(57) **Abrégé**

Capteur de température à piquer (10) destiné à être relié à un enregistreur de mesure par un câble de liaison extensible (12) solidaire du capteur, le capteur comprenant un corps (100) recevant une aiguille hypodermique (102) portant un thermocouple, et l'aiguille hypodermique est montée dans un support (104) inséré dans le corps du capteur et détachable à la fois du corps de capteur et du câble de liaison extensible lors d'un changement de l'aiguille hypodermique.

## Description

### Domaine Technique

La présente invention se rapporte au domaine des capteurs de température à thermocouple et elle concerne plus particulièrement un capteur à piquer utilisé pour mesurer la température de pneumatiques dans les centres d'essai ou lors de courses automobiles.

### Technique antérieure

On connaît de tels capteurs à piquer pour cette mesure de température. Toutefois, ces capteurs sont aujourd'hui essentiellement de type jetable car réalisés sous la forme d'un corps monobloc intégrant un câble de mesure destiné à la liaison du capteur avec un enregistreur de mesure fixe (de type centrale) ou portatif (de type thermomètre), et une aiguille hypodermique portant le thermocouple, un capot indépendant de protection de l'aiguille étant classiquement rattaché à ce corps monobloc par une chaînette à boules.

Or ces capteurs ne sont pas sans inconvénients. En effet, étant très sollicités, ils sont sujets à des casses fréquentes, qu'il s'agisse de la chainette à boules, du câble de mesure ou de l'aiguille hypodermique, et chacune de ces possibles ruptures implique alors le remplacement complet du capteur.

### Exposé de l'invention

La présente invention a donc pour but principal de proposer un capteur de température à piquer qui pallie ces inconvénients. Un autre but de l'invention est de permettre une protection de l'aiguille hypodermique en toutes circonstances. Encore un autre but est de rendre variable la profondeur de pénétration de l'aiguille hypodermique.

Ces buts sont atteints par un capteur de température à piquer destiné à être relié à un enregistreur de mesure par un câble de liaison extensible solidaire du capteur, le capteur comprenant un corps recevant une aiguille hypodermique portant un thermocouple, caractérisé en ce que l'aiguille hypodermique est montée dans un support inséré dans le corps du capteur et détachable à la fois du corps de capteur et du câble de liaison extensible lors d'un changement de l'aiguille hypodermique.

Ainsi, le remplacement de l'aiguille peut être effectué simplement sans avoir à jeter le capteur et sa présence dans le corps de capteur permet sa protection efficace en cas de non utilisation.

De préférence, le corps de capteur présente une forme sensiblement cylindrique avec un bouchon fermant une première extrémité et un embout cylindrique fixé à une seconde extrémité, opposée à la première, un capot de protection de l'aiguille hypodermique glissant dans l'embout cylindrique à l'encontre d'un ressort de rappel pour permettre une libération de l'aiguille hypodermique par une rétractation du capot lors du piquage du capteur.

Avantageusement, le capot de protection de l'aiguille hypodermique est de forme cylindrique avec un épaulement ajusté à une surface interne de l'embout cylindrique et une cavité pour former une extrémité d'appui du ressort de rappel, un canal central traversant le capot pour recevoir et protéger l'aiguille hypodermique en l'absence de piquage et pour faciliter sa libération lors du piquage du capteur.

De préférence, le câble de liaison extensible est relié au support de l'aiguille hypodermique par un connecteur détachable.

Avantageusement, le connecteur détachable est un connecteur coudé permettant le passage du câble de liaison extensible au travers d'une saignée latérale du corps de capteur, le bouchon assurant le maintien du connecteur coudé une fois ce dernier connecté et le bouchon vissé à l'extrémité du corps de capteur.

De préférence, le capteur comporte en outre une bague enfilée sur le capot de protection et vissée sur l'embout pour définir la profondeur de piquage.

Avantageusement, la bague est présente en plusieurs largeurs définissant chacune une profondeur de piquage différente, par exemple 5, 6, 8 ou 10mm.

De préférence, le thermocouple est de type K, J, T ou N.

L'invention concerne également un système de mesure de la température d'un pneumatique comportant un capteur de température à piquer tel que précité et un enregistreur de mesure relié au capteur de température à piquer par le câble de liaison extensible.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 montre un éclaté d'un capteur de température à piquer conforme à l'invention, et
[Fig. 2] la figure 2 montre en coupe une partie terminale du corps du capteur de la figure 1.

### Description des modes de réalisation

Le principe de l'invention repose sur un capteur de température à piquer modulaire dans lequel tant l'aiguille hypodermique que le câble de liaison extensible sont détachables séparément du corps du capteur qui en outre comporte une protection rétractable lors du piquage du capteur sur l'objet dont désire connaître la température, en l'espèce un pneumatique, sans que celui-ci ne doive être considéré comme limitatif.

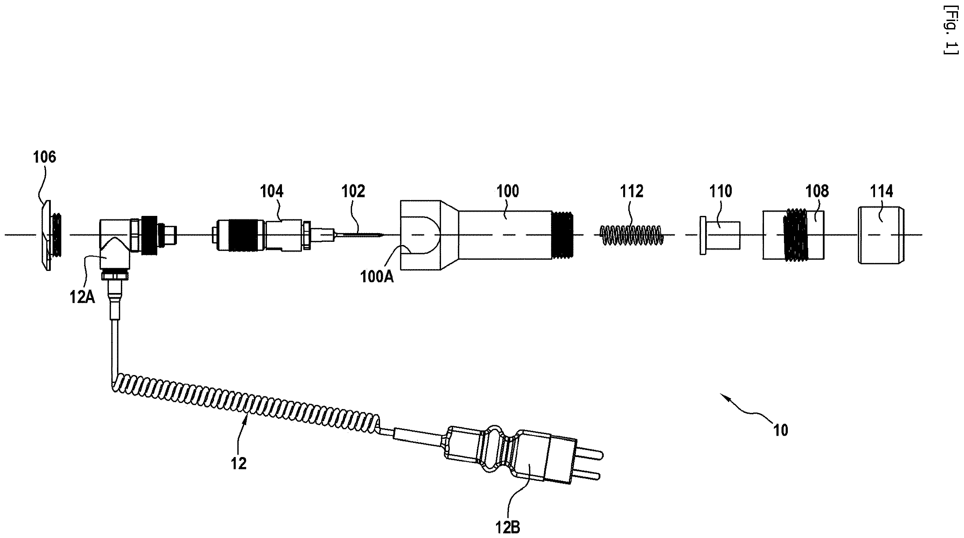

La figure 1 représente un éclaté du capteur de température à piquer 10 selon l'invention. L'ensemble est relié à un enregistreur de mesure (non illustré) tel qu'un thermomètre numérique ou une centrale de mesure par un câble de liaison extensible 12 solidaire par une première extrémité de ce capteur. Le câble est avantageusement de type spiralé avec un connecteur 12A à cette première extrémité et, à une extrémité opposée, une prise 12B pour la liaison avec l'enregistreur de mesure.

Le capteur comprend un corps 100 recevant une aiguille hypodermique 102 portant un thermocouple et montée dans un support 104 inséré dans le corps du capteur et détachable à la fois de ce corps et du câble de liaison extensible, notamment pour permettre le changement de l'aiguille hypodermique, en cas de casse par exemple.

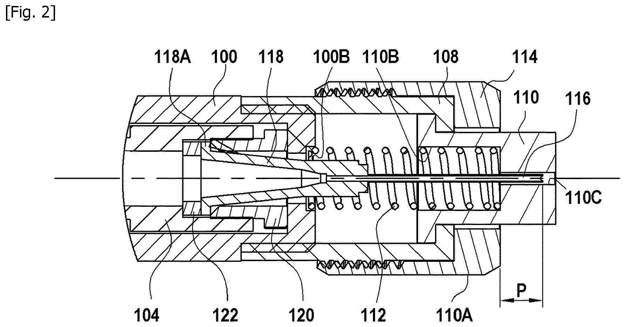

Le corps de capteur 100 présente une forme sensiblement cylindrique avec un bouchon 106 fermant, avantageusement par vissage une première extrémité de ce corps et un embout cylindrique 108 fixé (et de préférence vissé) à une seconde extrémité, opposée à la première, un capot 110 de protection de l'aiguille hypodermique glissant dans cet embout cylindrique à l'encontre d'un ressort de rappel 112 pour permettre une libération de cette aiguille par une rétractation du capot lors du piquage du capteur (voir la figure 2).

Le câble de liaison extensible 12 est relié directement au support 104 de l'aiguille hypodermique par le connecteur 12A qui est de forme coudée permettant le passage du câble de liaison extensible au travers d'une saignée latérale 100A du corps de capteur 100, le maintien du connecteur dans ce corps une fois connecté étant assuré par le bouchon 106 une fois celui-ci vissé à l'extrémité du corps de capteur. Le connecteur est muni de fiches de connexion mâles ou femelles pour coopérer avec des fiches de connexion femelles ou mâles correspondantes du support de l'aiguille hypodermique, le rendant ainsi détachable du support 104. Un détrompeur (non illustré) est avantageusement prévu pour faciliter cette connexion.

Le capteur comprend de plus une bague 114 enfilée sur le capot de protection 110 et avantageusement vissée sur l'embout 108 pour définir selon la largeur de cette bague une profondeur de piquage P variable, typiquement 5, 6, 8 ou 10mm.

On pourra noter que le thermocouple est typiquement de type K mais un thermocouple de type J, T ou N est aussi envisageable.

La figure 2 montre en coupe et plus en détail l'extrémité du corps de capteur 100 destiné à recevoir l'embout 108.

Le capot de protection 110 de l'aiguille hypodermique est de forme cylindrique avec un épaulement 110A ajusté à une surface interne de l'embout cylindrique sur laquelle il va pouvoir glisser et une cavité 110B pour former une première extrémité d'appui au ressort de rappel 112, son autre extrémité s'appuyant sur une cavité 100B du corps de capteur 100. La capot est traversé par un canal central 110C destiné à recevoir et protéger l'aiguille hypodermique 102 en l'absence de piquage (c'est-à-dire dans une position de repos non fonctionnelle) et pour faciliter sa libération lors du piquage du capteur dans l'objet (par exemple un pneumatique) dont on désire connaître la température.

L'aiguille hypodermique 102 constituée classiquement d'une aiguille creuse 116 enchâssée dans une base 118 généralement en matière plastique (mais qui peut être métallique) est avantageusement fixée dans son support 104 par un écrou à tête hexagonale 120 qui la maintient par une collerette 118A de sa base 118 contre un joint 122.

La configuration précédemment décrite permet de réaliser un capteur de température à piquer entièrement démontable et donc parfaitement modulaire. Ainsi, le changement de l'aiguille hypodermique suite à sa casse par exemple, s'effectue selon les étapes suivantes : il est tout d'abord procédé au retrait du bouchon afin de permettre le débranchement du connecteur coudé permettant la séparation du câble de liaison extensible (ces deux étapes sont les seules à effectuer si l'on désire changer ce câble). Ensuite, en le faisant glisser dans le corps de capteur 100, le support 104 de l'aiguille hypodermique peut être retiré de ce corps de capteur et l'aiguille hypodermique retirée à son tour de son support pour être changée en dévissant l'écrou de fixation 120. La procédure inverse permettra de récupérer un capteur fonctionnel. Cette configuration entièrement modulaire permet aussi le changement du ressort de rappel 112 ou du capot de protection 110 en dévissant l'embout 108 du corps de capteur 100.

Associé à un enregistreur de mesure relié au capteur de température à piquer par le câble de liaison extensible, cet ensemble forme un système de mesure de la température particulièrement adapté à la mesure de la température de pneumatiques, l'aiguille hypodermique pouvant être plantée facilement dans la gomme de ces pneumatiques et le capot garantissant sa protection hors fonctionnement.

## Revendications

1. Capteur de température à piquer (10) destiné à être relié à un enregistreur de mesure par un câble de liaison extensible (12) solidaire du capteur, le capteur comprenant un corps (100) recevant une aiguille hypodermique (102) portant un thermocouple, **caractérisé en ce que** l'aiguille hypodermique est montée dans un support (104) inséré dans le corps du capteur et détachable à la fois du corps de capteur et du câble de liaison extensible lors d'un changement de l'aiguille hypodermique.

2. Capteur de température à piquer selon la revendication 1, dans lequel le corps de capteur (100) présente une forme sensiblement cylindrique avec un bouchon (106) fermant une première extrémité et un embout cylindrique (108) fixé à une seconde extrémité, opposée à la première, un capot de protection (110) de l'aiguille hypodermique glissant dans l'embout cylindrique à l'encontre d'un ressort de rappel (112) pour permettre une libération de l'aiguille hypodermique par une rétractation du capot (110) lors du piquage du capteur.

3. Capteur de température à piquer selon la revendication 2, dans lequel le capot de protection (110) de l'aiguille hypodermique (102) est de forme cylindrique avec un épaulement (110A) ajusté à une surface interne de l'embout cylindrique et une cavité (110B) pour former une extrémité d'appui du ressort de rappel (112), un canal central (110C) traversant le capot (110) pour recevoir et protéger l'aiguille hypodermique (102) en l'absence de piquage et pour faciliter sa libération lors du piquage du capteur.

4. Capteur de température à piquer selon la revendication 2 ou la revendication 3, dans lequel le câble de liaison extensible (12) est relié au support (104) de l'aiguille hypodermique (102) par un connecteur détachable (12A).

5. Capteur de température à piquer selon la revendication 4, dans lequel le connecteur détachable (12A) est un connecteur coudé permettant le passage du câble de liaison extensible au travers d'une saignée latérale (100A) du corps de capteur, le bouchon (106) assurant le maintien du connecteur coudé une fois ce dernier connecté et le bouchon vissé à l'extrémité du corps de capteur (100).

6. Capteur de température à piquer selon l'une quelconque des revendications 2 à 5, comportant en outre une bague (114) enfilée sur le capot de protection et vissée sur l'embout (108) pour définir la profondeur de piquage (P).

7. Capteur de température à piquer selon la revendication 6, dans lequel la bague (114) est présente en plusieurs largeurs définissant chacune une profondeur de piquage différente.

8. Capteur de température à piquer selon la revendication 7, dans lequel les profondeurs de piquage (P) sont de 5, 6, 8 ou 10mm.

9. Capteur de température à piquer selon l'une quelconque des revendications 1 à 8, dans lequel le thermocouple est de type K, J, T ou N.

10. Système de mesure de la température d'un pneumatique comportant un capteur de température à piquer selon l'une quelconque des revendications 1 à 9 et un enregistreur de mesure relié au capteur de température à piquer (10) par le câble de liaison extensible (12).
